# FASCICULE DE BREVET EUROPEEN

(11) **EP 3 985 766 B1**
(45) Date de publication et mention de la délivrance du brevet: **06.12.2023**
(21) Numéro de dépôt: 21202869.0
(22) Date de dépôt: 15.10.2021
(51) Int. Cl.: H01M 8/026, H01M 8/0204, H01M 8/0267, H01M 8/0206, H01M 8/1018

(54) **PLAQUE BIPOLAIRE DE CELLULE ÉLECTROCHIMIQUE À PERTES DE CHARGE RÉDUITES**
BIPOLARE PLATTE EINER ELEKTROCHEMISCHEN ZELLE MIT GERINGEN LEISTUNGSVERLUSTEN
BIPOLAR PLATE OF ELECTROCHEMICAL CELL WITH REDUCED LOAD LOSSES

(30) Priorité: 19.10.2020 FR 2010729
(43) Date de publication de la demande: 20.04.2022
(73) Titulaire: Commissariat à l'énergie atomique et aux énergies alternatives, 75015 Paris (FR)
(72) Inventeur: POIROT-CROUVEZIER, Jean-Philippe, 38054 GRENOBLE Cedex 9 (FR)
(74) Mandataire: Brevalex

(56) Documents cités:
- DE-A1-102015 225 228
- US-A1- 2007 082 252
- US-A1- 2017 110 739

## Description

### DOMAINE TECHNIQUE

Le domaine de l'invention est celui des réacteurs électrochimiques comportant un empilement de cellules électrochimiques, telles que les piles à combustible et les électrolyseurs, et concerne plus particulièrement celui des plaques bipolaires comportant des circuits d'homogénéisation situés entre les collecteurs d'entrée et/ou de sortie des gaz réactifs d'une part et les circuits de distribution d'autre part.

### ÉTAT DE LA TECHNIQUE ANTÉRIEURE

Un réacteur électrochimique, tel qu'une pile à combustible ou un électrolyseur, comporte habituellement un empilement de cellules électrochimiques dont chacune comprend une anode et une cathode séparées électriquement l'une de l'autre par un électrolyte, les cellules étant le lieu d'une réaction électrochimique entre deux réactifs introduits de manière continue.

D'une manière générale, dans le cas d'une pile à combustible, le combustible (par exemple l'hydrogène) est apporté jusqu'à l'anode alors que le comburant (par exemple l'oxygène) est amené à la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs doivent y être apportés, les produits et les espèces non réactives doivent en être évacués, tout comme la chaleur produite lors de la réaction.

Les cellules électrochimiques sont habituellement séparées les unes des autres par des plaques bipolaires qui assurent l'interconnexion électrique des cellules. Les plaques bipolaires comportent une face anodique au niveau de laquelle est formé un circuit de distribution du carburant, et une face cathodique, opposée à la face anodique, au niveau de laquelle est formé un circuit de distribution du comburant. Chaque circuit de distribution prend la forme d'un réseau de canaux pour amener l'espèce réactive de manière homogène à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule. Les plaques bipolaires présentent également une fonction mécanique dans la mesure où elles assurent la transmission d'un effort de serrage au sein de l'empilement de cellules électrochimiques.

Les canaux de distribution peuvent s'étendre longitudinalement entre des première et deuxième extrémités du circuit de distribution correspondant, ces extrémités étant opposées l'une à l'autre suivant un axe longitudinal. Les canaux de distribution sont parallèles les uns aux autres, et peuvent s'étendre de manière rectiligne ou légèrement ondulée. Les circuits de distribution peuvent alors présenter une forme sensiblement rectangulaire. Les circuits de distribution anodique et cathodique sont superposés l'un à l'autre, de sorte que les premières extrémités anodique et cathodique sont superposées l'une à l'autre, comme le sont les deuxièmes extrémités anodique et cathodique. Des collecteurs d'entrée et/ou de sortie des gaz réactifs sont alors situés en regard des premières et deuxièmes extrémités des circuits de distribution, et peuvent être raccordés fluidiquement aux circuits de distribution par des circuits d'homogénéisation.

A ce titre, la figure 1 est une vue de dessus d'une plaque bipolaire 10 décrite dans le document WO2006/065370A2 comportant de tels circuits d'homogénéisation 20a, 20c. Dans cet exemple, la plaque bipolaire 10 comporte des circuits de distribution 14 dans lesquels les gaz réactifs s'écoulent ici en contre-courant. Aussi, le collecteur d'entrée cathodique 11c. 1 et le collecteur de sortie anodique 11a.2 sont situés en regard des premières extrémités 14.1 des circuits de distribution 14. Des circuits d'homogénéisation cathodique 20c et anodique 20a assurent la liaison fluidique entre les collecteurs d'entrée cathodique 11c.1 et de sortie anodique 11a.2 avec, respectivement, les circuits de distribution 14 cathodique et anodique. Ces circuits d'homogénéisation 20c, 20a sont partiellement superposés l'un à l'autre, de sorte que l'on peut définir des premières zones anodique et cathodique dans lesquelles se situe respectivement le circuit d'homogénéisation anodique 20a seul et le circuit d'homogénéisation cathodique 20c seul (pas de superposition entre les circuits d'homogénéisation 20a, 20c), et une deuxième zone dans laquelle les circuits d'homogénéisation anodique 20a et cathodique 20c sont superposés l'un à l'autre.

Les documents US 2017/110739 A1, DE 10 2015 225228 A1, et US 2007/082252 A1 décrivent d'autres exemples de plaques bipolaires comportant des circuits d'homogénéisation.

Il existe cependant un besoin de disposer d'une telle plaque bipolaire qui permette d'améliorer les performances du réacteur électrochimique, sans avoir à modifier l'épaisseur de la plaque bipolaire.

### EXPOSÉ DE L'INVENTION

L'invention a pour objectif de remédier au moins en partie aux inconvénients de l'art antérieur, et plus particulièrement de proposer une plaque bipolaire à circuits d'homogénéisation partiellement superposés, et d'épaisseur constante dans une zone contenant au moins l'un des circuits d'homogénéisation, permettant d'améliorer les performances du réacteur électrochimique, par une réduction des pertes de charge linéaires associées à au moins l'un des circuits d'homogénéisation. L'homogénéité du débit des gaz réactifs dans les circuits de distribution peut alors être préservée, tout comme celle du débit du fluide caloporteur dans le circuit de refroidissement.

Pour cela, l'objet de l'invention est une plaque bipolaire destinée à être située entre et au contact d'une anode et d'une cathode de deux cellules électrochimiques, comportant deux tôles conductrices accolées l'une à l'autre comportant des circuits de distribution anodique et cathodique, la plaque bipolaire présentant une épaisseur constante dans une zone comportant au moins l'un des circuits d'homogénéisation, comportant :
- des circuits de distribution anodique et cathodique, pour approvisionner lesdites anode et cathode en gaz réactifs, superposés l'un à l'autre, s'étendant longitudinalement entre des première et deuxième extrémités opposées l'une de l'autre, définis par des reliefs des tôles conductrices ; et un circuit de refroidissement défini par un espace interne situé entre les tôles conductrices ;
- des collecteurs anodique et cathodique pour l'injection de gaz réactifs ou la collection de fluides, et un collecteur d'un fluide caloporteur, situés en regard des premières extrémités ;
- les circuits d'homogénéisation anodique et cathodique, comportant chacun des canaux d'homogénéisation assurant la liaison fluidique entre l'un des collecteurs anodique et cathodique et la première extrémité correspondante, partiellement superposés l'un à l'autre, de sorte que sont définies :
   o une première zone anodique Z1a, resp. cathodique Z1c, comportant uniquement le circuit d'homogénéisation anodique, resp. cathodique, dont les canaux d'homogénéisation débouchent sur le collecteur anodique, resp. cathodique ;
   o une deuxième zone Z2 dans laquelle les circuits d'homogénéisation sont superposés l'un à l'autre, les canaux d'homogénéisation anodique, resp. cathodique, débouchant sur le circuit de distribution anodique, resp. cathodique, et présentant une profondeur nominale anodique Paₙ, resp. cathodique Pcₙ.

Selon l'invention, dans au moins l'une des premières zones anodique Z1a et cathodique Z1c, au moins une partie des canaux d'homogénéisation présentent, sur au moins une partie de leur longueur, une profondeur Pa₁, Pc₁ supérieure à la profondeur nominale correspondante Paₙ, Pcₙ.

Certains aspects préférés mais non limitatifs de cette plaque bipolaire sont les suivants.

La profondeur Pa₁, Pc₁ peut être inférieure à la somme des profondeurs nominales Paₙ, Pcₙ.

La profondeur Pa₁, Pc₁ peut être égale à au moins 1,75 fois la profondeur nominale correspondante Paₙ, Pcₙ.

La longueur des canaux d'homogénéisation, dans la partie où ils présentent une profondeur Pa₁, Pc₁, peut être égale à au moins 10% de la longueur totale de ces canaux d'homogénéisation entre le collecteur et le circuit de distribution correspondant.

La tôle conductrice, opposée à celle comportant des canaux d'homogénéisation de profondeur Pa₁, Pc₁, peut présenter une surface principalement plane s'étendant en regard d'une pluralité desdits canaux d'homogénéisation de profondeur Pa₁, Pc₁.

La tôle conductrice, opposée à celle comportant des canaux d'homogénéisation de profondeur Pa₁, Pc₁, peut présenter au moins une portion de renfort venant au contact d'une paroi de fond d'au moins un canal d'homogénéisation de profondeur Pa₁, Pc₁.

La première zone anodique Z1a ou la première zone cathodique Z1c peut comporter un premier tronçon dit profond Z1a₁ Z1c₁ dans lequel les canaux d'homogénéisation présentent la profondeur Pa₁, Pc₁, et un deuxième tronçon Z1a₂ Z1c₂ dans lequel les canaux d'homogénéisation présentent une profondeur Pa₂, Pc₂ comprise entre la profondeur Pa₁, Pc₁ et la profondeur nominale Paₙ, Pcₙ.

La plaque bipolaire peut comporter un premier circuit d'homogénéisation dans lequel les canaux d'homogénéisation présentent ladite profondeur Pa₁, Pc₁, situé, en assurant la liaison fluidique, entre un collecteur d'injection d'un gaz réactif et une entrée du circuit de distribution correspondant, ainsi qu'un deuxième circuit d'homogénéisation dans lequel les canaux d'homogénéisation présentent ladite profondeur Pa₁, Pc₁, situé, en assurant la liaison fluidique, entre une sortie du circuit de distribution correspondant et un collecteur adapté à collecter un fluide provenant du circuit de distribution correspondant.

L'invention porte également sur un réacteur électrochimique, comportant un empilement de cellules électrochimiques entre lesquels sont intercalées des plaques bipolaires selon l'une quelconque des caractéristiques précédentes, et un compresseur raccordé à un collecteur d'injection d'un gaz réactif, le circuit d'homogénéisation débouchant sur un tel collecteur d'injection comportant des canaux d'homogénéisation présentant ladite profondeur Pa₁, Pc₁.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique de dessus d'une plaque bipolaire selon un exemple de l'art antérieur ;
la figure 2 est une vue partielle et schématique, en coupe transversale, de cellules électrochimiques adjacentes séparées l'une de l'autre par une plaque bipolaire, illustrant les circuits de distribution et le circuit de refroidissement ;
les figures 3A à 3C sont des vues partielles et schématiques, en vue de dessus (fig.3A et 3B) et en éclaté (fig.3C), d'une plaque bipolaire selon un mode de réalisation, illustrant plus particulièrement les circuits d'homogénéisation ;
les figures 4A et 4B sont des vues partielles et schématiques de la plaque bipolaire dans la deuxième zone Z2 dans laquelle les circuits d'homogénéisation anodique et cathodique sont superposés l'un à l'autre, en différentes coupes suivant un axe transversal (fig.4A), et en coupe suivant un axe longitudinal (fig.4B) ;
les figures 5A et 5B sont des vues partielles et schématiques de la plaque bipolaire illustrée sur la fig.3A, en coupe suivant l'axe longitudinal dans la première zone anodique Z1a dans laquelle se situe uniquement le circuit d'homogénéisation anodique (fig.5A), et en coupe suivant l'axe longitudinal à cheval entre la première zone anodique Z1a et la deuxième zone Z2 (fig.5B) ;
les figures 6A et 6B sont des vues partielles et schématiques de la plaque bipolaire illustrée sur la fig.3A, en coupe suivant l'axe longitudinal dans un tronçon dit profond Z1c₁ de la première zone cathodique Z1c dans laquelle se situe uniquement le circuit d'homogénéisation cathodique (fig.6A), et en coupe suivant l'axe longitudinal à cheval entre le tronçon profond Z1c₁ et la deuxième zone Z2 (fig.6B).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une plaque bipolaire d'un réacteur électrochimique. On décrira différents modes de réalisation et variantes en référence à une pile à combustible, et en particulier à une pile à hydrogène de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques.

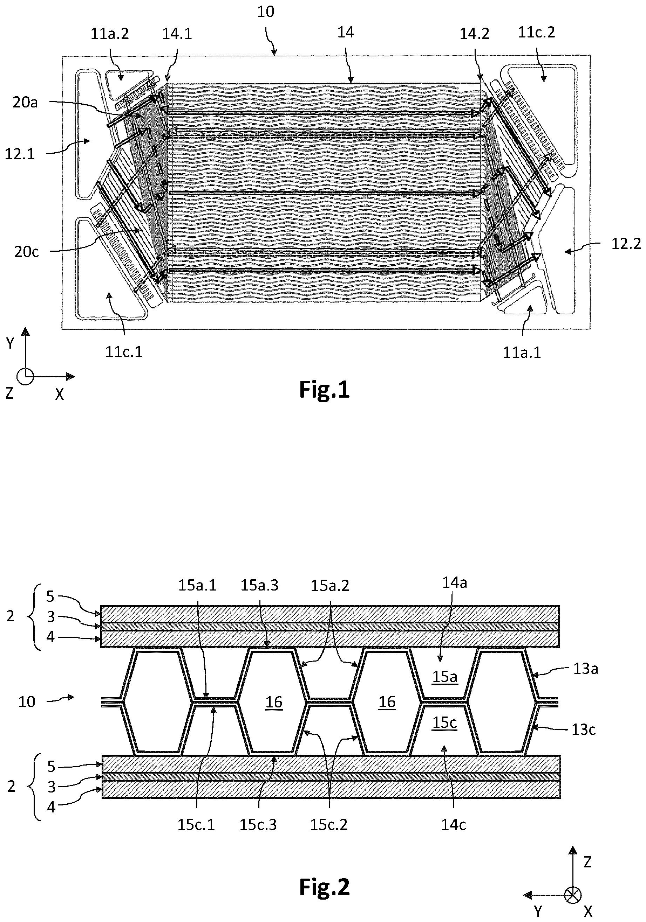

Comme décrit en détail ci-dessous, la plaque bipolaire selon l'invention est similaire à celle décrite en référence à la fig.1, en ce qu'elle comporte, d'une manière générale, des circuits de distribution des gaz réactifs, des collecteurs d'entrée desdits gaz réactifs et de sortie de fluide, et des circuits d'homogénéisation assurant le raccord fluidique entre les collecteurs d'entrée/sortie et les circuits de distribution. Les circuits de distribution et les circuits d'homogénéisation sont formés par des canaux définis ici dans les tôles conductrices de la plaque bipolaire.

La figure 2 est une vue partielle et schématique, en coupe transversale, de cellules électrochimiques adjacentes où des assemblages membrane/électrodes 2 sont séparés l'un de l'autre par une plaque bipolaire 10.

On définit ici et pour la suite de la description un repère direct tridimensionnel XYZ, où le plan XY s'étend de manière parallèle au plan de la plaque bipolaire 10, l'axe X étant un axe longitudinal suivant lequel s'étendent les circuits de distribution 14 entre des premières et deuxièmes extrémités 14.1, 14.2, et où l'axe Z est orienté suivant la dimension d'épaisseur de la plaque bipolaire 10.

Les cellules électrochimiques appartiennent ici à un empilement de cellules d'un réacteur électrochimique, ici d'une pile à combustible. Chaque cellule électrochimique comporte un assemblage membrane/électrodes 2 formé d'une anode 4 et d'une cathode 5 séparées l'une de l'autre par un électrolyte 3 comprenant ici une membrane polymère. Les assemblages membrane/électrodes 2 des cellules électrochimiques sont disposés entre des plaques bipolaires 10 adaptées à amener des espèces réactives aux électrodes et à évacuer la chaleur produite lors de la réaction électrochimique. L'assemblage membrane électrodes 2 s'étend suivant un plan principal de la cellule électrochimique parallèle au plan XY, et la surface des électrodes dans le plan XY définit une zone active de la cellule électrochimique.

De manière connue en soi, chaque électrode 4, 5 comporte une couche de diffusion (GDL, pour *Gas Diffusion Layer,* en anglais), disposée au contact d'une plaque bipolaire, et une couche active située entre la membrane et la couche de diffusion. Les couches actives sont le lieu des réactions électrochimiques. Elles comportent des matériaux permettant les réactions d'oxydation et de réduction aux interfaces respectives de l'anode et la cathode avec la membrane. Les couches de diffusion sont réalisées en matériau poreux autorisant la diffusion des espèces réactives à partir des circuits de distribution 14 des plaques bipolaires 10 jusqu'aux couches actives, ainsi que la diffusion des produits issus de la réaction électrochimique jusqu'au même circuit de distribution 14.

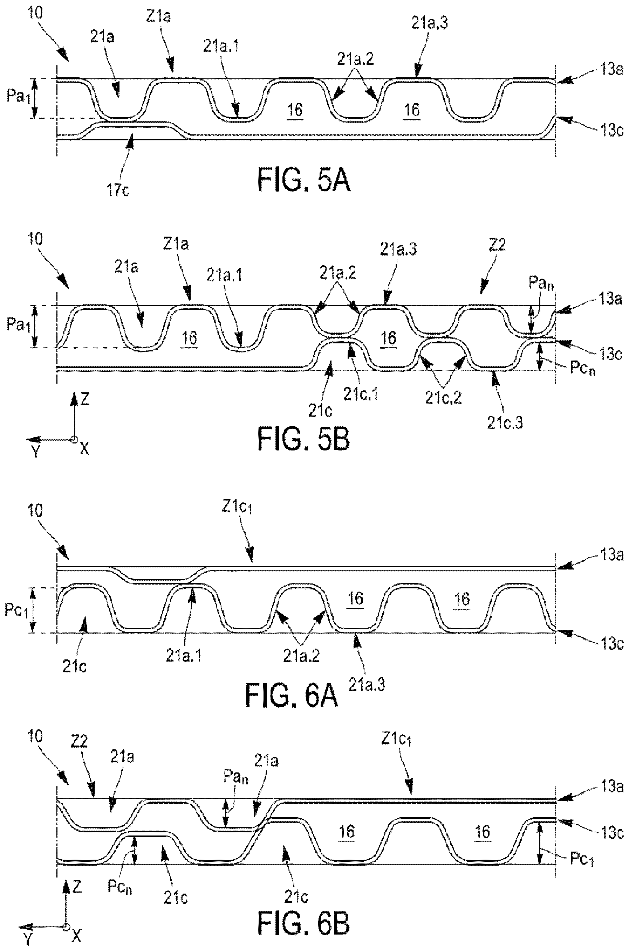

La plaque bipolaire 10 est formée ici de deux tôles conductrices 13a, 13c accolées et assemblées l'une à l'autre, ces tôles conductrices 13a, 13c étant embouties de manière à former des circuits de distribution 14a, 14c de gaz réactifs au niveau des électrodes 4, 5 de chacune des cellules électrochimiques, et un circuit de refroidissement 16 situé entre les tôles conductrices. Elles forment également les canaux fluidiques 21 des circuits d'homogénéisation 20 (cf. fig.5B par ex.). Ainsi, la tôle conductrice anodique13a est destinée à être au contact de l'anode 4 d'un assemblage membrane/électrodes 2 d'une cellule électrochimique, alors que la tôle conductrice cathodique 13c est destinée à être au contact de la cathode 5 d'un assemblage membrane/électrodes 2 d'une cellule électrochimique adjacente.

Chaque tôle conductrice 13a, 13c comporte une face externe et une face interne opposée, les tôles conductrices 13a, 13c étant accolées l'une à l'autre au niveau des faces internes. Une face externe est dite anodique lorsqu'elle est destinée à être au contact de l'anode d'une cellule électrochimique, ou cathodique lorsqu'elle est destinée à être au contact de la cathode de la cellule électrochimique adjacente. La face anodique d'une tôle conductrice 13a comporte les circuits de distribution 14a et d'homogénéisation 20a d'un gaz réactif, ici l'hydrogène, et la face cathodique de l'autre tôle conductrice 13c comporte les circuits de distribution 14c et d'homogénéisation 20c d'un autre gaz réactif, ici l'oxygène éventuellement contenu dans de l'air.

Les tôles conductrices 13a, 13c se présentent sous forme de feuilles, ou de plaques élémentaires de faible épaisseur, réalisées en un matériau électriquement conducteur, par exemple un métal voire un matériau composite par exemple chargé en graphite. L'épaisseur peut être de l'ordre de quelques dizaines de microns à quelques centaines de microns dans le cas des tôles métalliques, par exemple de 50µm à 200µm environ. Les reliefs ou bossages qui forment les canaux fluidiques des circuits de distribution 14 et des circuits d'homogénéisation 20 peuvent être réalisés par emboutissage ou par mise en forme sous presse, voire par moulage, entre autres.

Les canaux fluidiques 15 des circuits de distribution 14a, 14c s'étendent longitudinalement de manière parallèle entre eux, entre deux extrémités 14.1, 14.2 opposées l'une à l'autre suivant un axe longitudinal, ici suivant l'axe X, de manière similaire à la plaque bipolaire illustrée sur la fig. 1. Autrement dit, chaque circuit de distribution 14a, 14c présente une première extrémité 14.1 et une deuxième extrémité 14.2 au niveau desquelles les canaux de distribution 15 débouchent. Les circuits de distribution 14a, 14c sont superposés l'un à l'autre suivant l'axe Z. La première extrémité 14a.1 du circuit de distribution anodique 14a est superposée à celle 14c. 1 du circuit de distribution cathodique 14c. Il en est de même également des deuxièmes extrémités anodique et cathodique. Les circuits de distribution 14a, 14c présentent alors une forme générale, dans le plan XY, sensiblement rectangulaire.

La plaque bipolaire 10 comporte des collecteurs 11a, 11c d'entrée/sortie de gaz réactifs, destinés à fournir des gaz réactifs aux circuits de distribution 14a, 14c, et à recevoir des fluides provenant de ces derniers. Elle comporte également des collecteurs 12 d'entrée/sortie du fluide caloporteur. Des collecteurs anodique 11a et cathodique 11c sont disposés en regard des premières extrémités 14.1 et des deuxièmes extrémités 14.2 des circuits de distribution 14. Dans cet exemple, des collecteurs 12 d'un fluide caloporteur sont également situés en regard des extrémités 14.1, 14.2 des circuits de distribution 14a, 14c. Dans cet exemple, un collecteur d'entrée 12.1 est disposé entre un collecteur anodique 11a et un collecteur cathodique 11c. Dans cet exemple, le sens d'écoulement est co-courant. Des collecteurs d'entrée anodique 11a.1 et cathodique 11c.1, ainsi qu'un collecteur d'entrée 12.1 du fluide caloporteur, sont situés en regard des premières extrémités 14.1, ici en regard des entrées des circuits de distribution 14a, 14c. Cet exemple est donné à titre purement illustratif, dans la mesure où le sens d'écoulement peut être à contre-courant.

Chaque canal de distribution 15a, 15c est délimité par des parois latérales 15a.2, 15c.2 qui s'étendent sensiblement suivant l'axe Z de l'épaisseur de la plaque bipolaire 10, les parois latérales 15a.2, 15c.2 étant reliées entre elles par une paroi de fond 15a.1, 15c.1. Chaque canal de distribution 15a, 15c est séparé des canaux voisins du même circuit de distribution par une paroi 15a.3, 15c.3, dite nervure de séparation, qui relie les parois latérales 15a.2, 15c.2 adjacentes de deux canaux de distribution adjacents, cette nervure de séparation 15a.3, 15c.3étant destinée à venir au contact de l'électrode correspondante. Ainsi, les canaux de distribution anodiques 15a, resp. cathodiques 15c, sont séparés deux à deux par une nervure de séparation anodique 15a.3, resp. cathodique 15c.3. La nervure de séparation est une paroi dont la surface peut être de préférence sensiblement plane. On peut définir une profondeur P d'un canal fluidique, ici d'un canal de distribution 15 mais cette définition concerne également les canaux d'homogénéisation 21, comme étant la distance suivant l'axe Z entre la paroi de fond du canal et un plan passant par les nervures de séparation adjacentes.

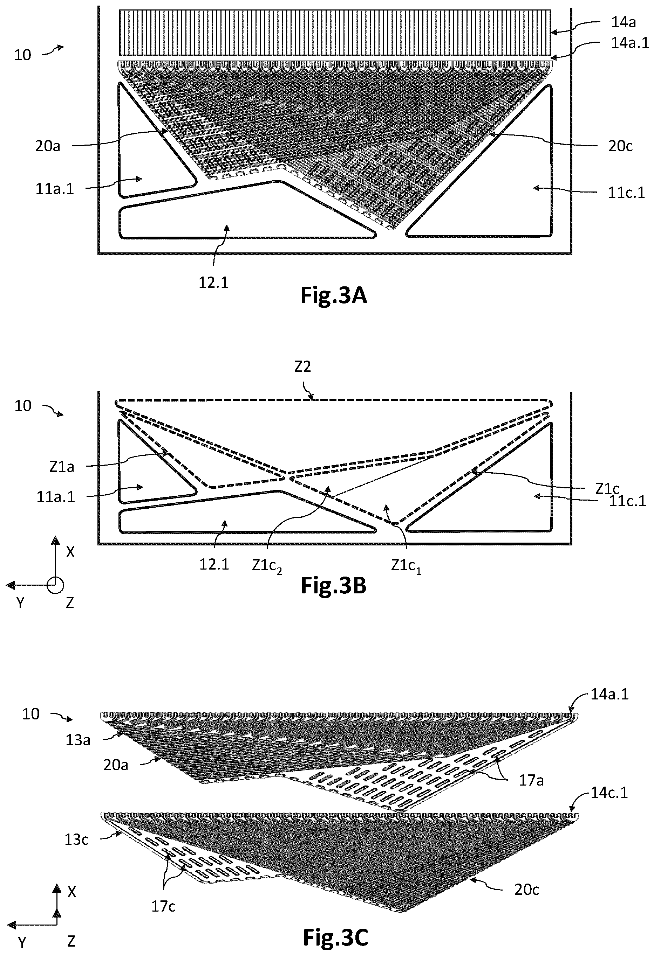

Les figures 3A à 3C sont respectivement une vue de dessus (fig. 3A et 3B) et une vue éclatée (fig.3C) d'une partie d'une plaque bipolaire 10 selon un mode de réalisation, illustrant plus précisément les circuits d'homogénéisation anodique 20a et cathodique 20c situés en regard des premières extrémités 14a.1, 14c.1 (d'entrée) des circuits de distribution 14a, 14c. Seul le circuit de distribution 14a est représenté.

Les circuits d'homogénéisation anodique 20a et cathodique 20c assurent respectivement le raccord fluidique entre les collecteurs anodique 11a et cathodique 11c d'une part avec le circuit de distribution correspondant 14a, 14c. On représente ici les collecteurs d'entrée anodique 11a.1 et cathodique 11c.1. Les circuits d'homogénéisation sont avantageusement dimensionnés de sorte que les débits des gaz réactifs soient sensiblement identiques à l'entrée des différents canaux de distribution.

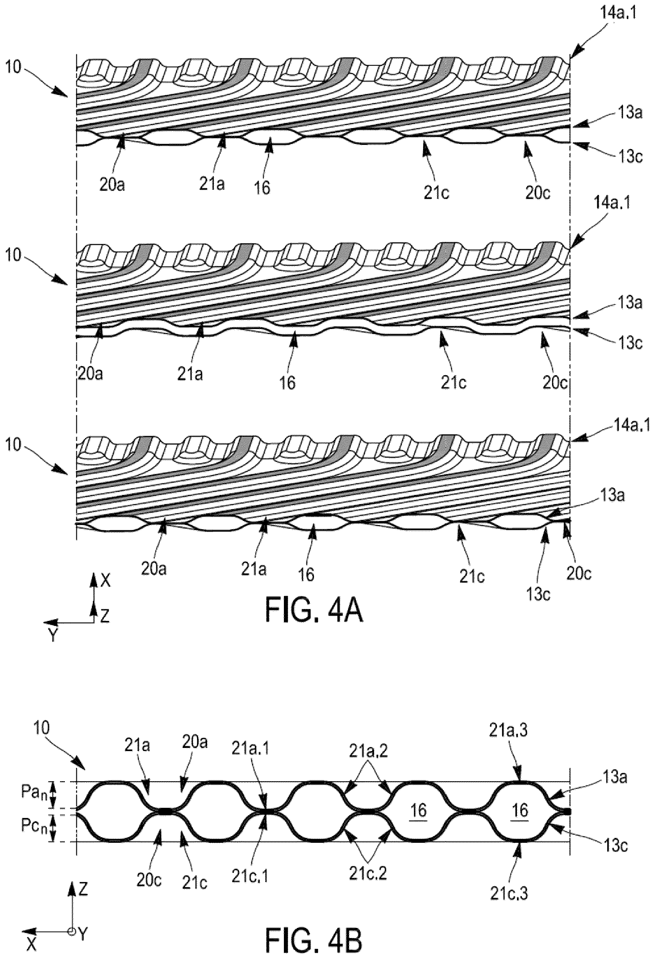

Chaque circuit d'homogénéisation 20a, 20c est formé d'une pluralité de canaux d'homogénéisation 21a, 21c (cf. fig.4B par ex.), lesquels sont formés dans une tôle conductrice 13a, 13c de la plaque bipolaire 10 de manière similaire aux canaux de distribution 15a, 15c. Chaque canal d'homogénéisation 21a, 21c présente ainsi une paroi de fond longitudinale 21a.1, 21c.1 et deux parois latérales 21a.2, 21c.2. Les canaux d'homogénéisation 21a, 21c sont séparés deux à deux par une nervure de séparation 21a.3, 21c.3 qui est destinée à venir au contact de la cellule électrochimique adjacente. Comme précédemment, la profondeur locale d'un canal d'homogénéisation 21a, 21c est définie comme étant la distance suivant l'axe Z entre la paroi de fond 21a.1, 21c.1 et un plan passant par les nervures de séparation 21a.3, 21c.3 adjacentes.

Les canaux d'homogénéisation 21a, 21c s'étendent longitudinalement suivant au moins un axe longitudinal d'écoulement, lequel est incliné par rapport à l'axe longitudinal (ici l'axe X) des canaux de distribution 14a, 14c. Chaque canal d'homogénéisation 21a, 21c s'étend à partir un collecteur anodique ou cathodique 11a, 11c d'un gaz réactif et débouche sur un ou plusieurs canaux de distribution 15a, 15c.

Chaque circuit d'homogénéisation 20a, 20c peut présenter un seul axe longitudinal d'écoulement entre ses entrée et sortie, lequel peut être rectiligne, comme dans le document WO2006/065370 mentionné précédemment. C'est le cas ici pour le circuit d'homogénéisation cathodique 20c, comme l'illustre la fig.3C. Il peut également être scindé en plusieurs tronçons successifs ayant chacun un axe longitudinal d'écoulement rectiligne, ces différents axes longitudinaux d'écoulement étant alors inclinés les uns par rapport aux autres, comme dans le document WO2016/009154A2. C'est le cas ici pour le circuit d'homogénéisation anodique 20a, comme l'illustrent les fig. 3A et 3C.

Du fait que les collecteurs anodique 11a et cathodique 11c sont décalés latéralement suivant l'axe Y tout en étant situés en regard des premières extrémités 14a.1, 14c.1 des circuits de distribution 14a, 14c, les circuits d'homogénéisation 20a, 20c sont partiellement superposés l'un à l'autre. Aussi, l'on peut définir différentes zones selon que les circuits d'homogénéisation 20a, 20c sont localement, ou non, superposés l'un à l'autre, à savoir :
- une première zone anodique Z1a, comportant uniquement le circuit d'homogénéisation anodique 20a, dont les canaux d'homogénéisation 21a débouchent sur le collecteur anodique 11a;
- une première zone cathodique Z1c, comportant uniquement le circuit d'homogénéisation cathodique 20c, dont les canaux d'homogénéisation 21c débouchent sur le collecteur cathodique 11c;
- une deuxième zone Z2, dans laquelle les circuits d'homogénéisation anodique 20a et cathodique 20c sont superposés l'un à l'autre, les canaux d'homogénéisation anodique 21a, resp. cathodique 21c, débouchant sur la première extrémité anodique 14a.1, resp. cathodique 14a.1.

Dans l'exemple illustré sur les fig.3A à 3C, la première zone anodique Z1a comporte donc seulement le circuit d'homogénéisation anodique 20a, et non pas le circuit d'homogénéisation cathodique 20c. Aussi, dans la première zone anodique Z1a, la tôle conductrice anodique 13a définit les canaux d'homogénéisation 21a qui s'étendent à partir du collecteur anodique 11a, alors que la tôle conductrice cathodique 13c ne comporte pas de canaux d'homogénéisation 21c. La tôle conductrice cathodique 13c présente une surface principalement plane destinée à être au contact de la cellule électrochimique adjacente. Par principalement plane, on entend que la majeure partie de la tôle conductrice cathodique 13c est plane, et s'étend en regard d'une pluralité de canaux d'homogénéisation 21a, étant entendu qu'elle peut comporter, comme illustré, des portions 17c de renfort mécanique destinées à venir au contact, localement, de canaux d'homogénéisation 21a de la tôle conductrice anodique 13a.

La première zone cathodique Z1c comporte seulement le circuit d'homogénéisation cathodique 20c, et non pas le circuit d'homogénéisation anodique 20a. Aussi, dans la première zone cathodique Z1c, la tôle conductrice cathodique 13c définit les canaux d'homogénéisation 21c qui s'étendent à partir du collecteur cathodique 11c, alors que la tôle conductrice anodique 13a ne comporte pas de canaux d'homogénéisation 21a. La tôle conductrice anodique 13a présente une surface principalement plane destinée à être au contact de la cellule électrochimique adjacente. Comme illustré, elle peut comporter des portions 17a de renfort mécanique destinées à venir au contact, localement, de canaux d'homogénéisation 21c de la tôle conductrice cathodique 13c.

La deuxième zone Z2 comporte les circuits d'homogénéisation anodique 20a, cathodique 20c superposés l'un à l'autre. Elle est située en aval des premières zones anodique Z1a et cathodique Z2. Aussi, la tôle conductrice anodique 13a définit les canaux d'homogénéisation 21a dont les parois de fond 21a.1 viennent localement en contact des parois de fond 21c.1 des canaux d'homogénéisation 21c de la tôle conductrice cathodique 13c. Les canaux d'homogénéisation anodique 21a, resp. cathodique 21c, débouchent sur la première extrémité anodique 14a.1, resp. cathodique 14c.1, des circuits de distribution 14a, 14c.

Les figures 4A et 4B sont des vues partielles et schématiques de la plaque bipolaire 10 illustrée sur la fig.3A, dans la deuxième zone Z2, en différentes coupes transversales suivant l'axe Y, lesquelles sont successives suivant l'axe X (fig.4A), et en coupe longitudinale suivant l'axe X (fig.4B). Ces figures illustrent plus précisément les circuits d'homogénéisation anodique 20a et cathodique 20c, lesquels sont superposés l'un à l'autre.

Dans la deuxième zone Z2, les canaux d'homogénéisation anodique 21a présentent une profondeur nominale constante Paₙ et les canaux d'homogénéisation cathodique 21c présentent une profondeur nominale constante Pcₙ. Par profondeur nominale, on entend une profondeur de référence. Les valeurs Paₙ et Pcₙ sont de préférence égales. Ces valeurs nominales Paₙ et Pcₙ correspondent également à la profondeur des canaux de distribution anodique 15a et cathodique 15c.

Aussi, les parois de fond 21a.1 des canaux d'homogénéisation anodiques 21a viennent localement au contact des parois de fond 21c.1 des canaux d'homogénéisation cathodiques 21c. A la différence des canaux de distribution 15a, 15c, les parois de fond 21a. 1 des canaux d'homogénéisation anodique 21a ne sont pas en contact continu, sur toute leur longueur, avec celles 21c.1 des canaux d'homogénéisation cathodique 21c, dans la mesure où l'axe longitudinal d'écoulement des canaux d'homogénéisation anodique 21a n'est pas parallèle avec celui des canaux d'homogénéisation cathodique 21c.

Le circuit de refroidissement 16, dans cette deuxième zone Z2, est défini par l'espace interne délimité suivant l'axe Z par les deux tôles conductrices 13a, 13c. Le fluide caloporteur circule alors, parfois dans des conduits au périmètre fermé, lesquels sont définis par les tôles conductrices anodique 13a et cathodique 13c au contact l'une de l'autre ; et s'écoule parfois dans toutes les directions dans le plan XY lorsque les tôles conductrices anodique 13a et cathodique 13c ne sont pas au contact l'une de l'autre. Aussi, le fluide de refroidissement présente un débit sensiblement homogène à l'entrée de la partie du circuit de refroidissement 16 située entre les circuits de distribution 14a, 14c.

Par ailleurs, la plaque bipolaire 10 présente une épaisseur constante E_{cd} dans le plan XY au niveau des circuits de distribution 14a, 14c, et une épaisseur constante E_{ch} dans le plan XY dans une zone contenant au moins l'un des circuits d'homogénéisation 20a, 20c. Les valeurs E_{cd} et E_{ch} peuvent être identiques ou non. L'épaisseur E est définie comme étant la distance suivant l'axe Z entre deux plans passant par les nervures de séparation des tôles conductrices anodique 13a et cathodique 13c : pour la valeur E_{cd}, au niveau des circuits de distribution ; et pour la valeur E_{ch}, dans une zone comportant au moins l'un des circuits d'homogénéisation anodique 20a et cathodique 20c. L'épaisseur E_{ch} est égale à la somme des valeurs nominales Paₙ et Pcₙ et de l'épaisseur e des tôles conductrices anodique 13a et cathodique 13c : E_{ch} = Paₙ + Pcₙ + 2×e.

Dans le but d'améliorer les performances du réacteur électrochimique, la plaque bipolaire 10 selon l'invention prévoit que, dans au moins l'une des premières zones anodique Z1a et cathodique Z1c, les canaux d'homogénéisation 21a, 21c présentent, sur au moins une partie de leur longueur, une profondeur Pa₁, Pc₁ supérieure à la profondeur nominale correspondante Paₙ, Pcₙ.

Ainsi, la section locale d'écoulement du gaz réactif en question est augmentée sur au moins une partie de la longueur des canaux d'homogénéisation 21a, 21c de la première zone anodique Z1a et/ou cathodique Z1c. Cela se traduit par une diminution des pertes de charge linéaires dans ces canaux d'homogénéisation 21a, 21c, améliorant alors les performances du réacteur électrochimique.

En effet, la pression absolue du gaz réactif circulant dans les canaux de distribution 14a, 14c, en particulier du côté cathodique, peut être de l'ordre de quelques bars dans le cas d'une pile à combustible, et de l'ordre de plusieurs dizaines de bars dans le cas d'un électrolyseur. Cette mise en pression de ce gaz réactif, au moyen par ex. d'un compresseur, tient compte notamment des pertes de charge dans les canaux fluidiques de la plaque bipolaire 10. Aussi, le coût énergétique qui lui est associé impacte les performances du réacteur électrochimique. Dans la plaque bipolaire selon l'invention, les pertes de charge linéaires associées aux canaux fluidiques d'au moins l'un des gaz réactifs sont alors réduites, ce qui permet de diminuer le coût énergétique de mise en pression du gaz réactif, et donc d'améliorer les performances du réacteur électrochimique.

Par ailleurs, cette adaptation de la profondeur locale des canaux d'homogénéisation 21a, 21c est effectuée sans modifier l'épaisseur E_{ch} de la plaque bipolaire 10 dans une zone contenant au moins l'un des circuits d'homogénéisation 20a, 20c. De plus, cela n'induit pas une dégradation des propriétés d'écoulement des gaz réactifs dans les circuits de distribution 14a, 14c qui peuvent rester structurellement inchangés, ni n'induit une dégradation des propriétés d'écoulement du fluide caloporteur dans la mesure où celui-ci est en mesure de s'écouler librement dans le plan XY au moins dans la deuxième zone Z2, ce qui assure une bonne homogénéité de son débit à l'entrée des circuits de distribution 14a, 14c.

Dans ce mode de réalisation, la plaque bipolaire 10 comporte des canaux d'homogénéisation 21a, 21c à profondeur supérieure à la valeur nominale Paₙ, Pcₙ dans la première zone anodique Z1a et dans la première zone cathodique Z1c. Bien entendu, en variante, ce peut être le cas uniquement dans la première zone anodique Z1a, ou uniquement dans la première zone cathodique Z1c. Par ailleurs, ces canaux d'homogénéisation 21a, 21c à profondeur augmentée sont situés en regard de l'entrée du circuit de distribution correspondant 14a, 14c. De préférence, des canaux d'homogénéisation 21a, 21c à profondeur augmentée sont également situés en regard de la sortie du circuit de distribution correspondant 14a, 14c.

Les figures 5A et 5B sont des vues partielles et schématiques de la plaque bipolaire 10 illustrée sur la fig.3A, en coupe longitudinale suivant l'axe X dans la première zone anodique Z1a (fig.5A), et en coupe longitudinale suivant l'axe X à cheval entre la première zone anodique Z1a et la deuxième zone Z2 (fig.5B).

Dans la première zone anodique Z1a, les canaux d'homogénéisation 21a présentent une profondeur augmentée Pa₁ ici sur toute leur longueur (cf. fig.3A et 3B) : ils débouchent donc directement sur la deuxième zone Z2. Par ailleurs, les canaux d'homogénéisation 21a à profondeur augmentée présente avantageusement une longueur différente d'un canal à l'autre, de sorte que le débit du gaz réactif soit sensiblement homogène à l'entrée 14a.1 du circuit de distribution anodique 14a : comme l'illustre la fig.3A, les canaux 21a situés à proximité de l'entrée de distribution 14a.1 sont plus courts que les canaux 21a qui en sont éloignés. De plus, dans un circuit d'homogénéisation considéré (anodique ou cathodique), le rapport entre la longueur d'un canal fluidique à profondeur augmentée sur la longueur totale de ce canal fluidique (donc dans la première zone Z1a et la deuxième zone Z2) est de préférence identique d'un canal à l'autre, par exemple à au plus 5% près. De préférence, cette condition est vérifiée pour au moins 75% des canaux du circuit d'homogénéisation considéré. Ce rapport est de préférence identique dans le circuit d'homogénéisation en aval du circuit de distribution considéré que dans le circuit d'homogénéisation en amont de celui-ci, de manière à contribuer à préserver l'homogénéité des débits du gaz réactif dans les différents canaux fluidiques du circuit de distribution

De plus, la longueur des canaux d'homogénéisation 21a dans la partie où ils présentent avantageusement une profondeur augmentée Pa₁ est égale à au moins 10% de la longueur totale. La longueur totale des canaux d'homogénéisation 21a est la longueur de ces canaux 21a entre le collecteur 11a et le circuit de distribution 14a. Par ailleurs, la profondeur augmentée Pa₁ est de préférence au moins égale à 1,75 fois la profondeur nominale Paₙ. Il en est de même pour les canaux d'homogénéisation 21c.

Comme l'illustre la fig.5A, les canaux d'homogénéisation anodique 21a présentent, dans la première zone anodique Z1a, une profondeur augmentée Pa₁ supérieure à la valeur nominale Paₙ. La tôle conductrice cathodique 13c ne comporte pas de canaux d'homogénéisation 21c de sorte qu'elle est sensiblement plane et destinée à venir au contact de la cellule électrochimique adjacente. Elle comporte cependant localement des portions de renfort 17c dont la paroi de fond vient au contact de la paroi de fond 21a. 1 d'un ou de plusieurs canaux d'homogénéisation 21a. Dans cet exemple, la profondeur Pa₁ est supérieure à la valeur nominale Paₙ mais reste avantageusement inférieure à Paₙ + Pcₙ de sorte que les canaux d'homogénéisation ne viennent pas au contact de la tôle conductrice cathodique 13c (hormis au niveau des portions de renfort 17c). Aussi, le fluide caloporteur peut circuler dans le plan XY, ce qui contribue à améliorer l'homogénéité de son débit dans le circuit de refroidissement 16. Cependant, en variante, la profondeur Pa₁ peut être égale à Paₙ + Pcₙ, de sorte que les canaux d'homogénéisation 21a sont au contact de la tôle conductrice cathodique 13c dans toute la première zone anodique Z1a.

Comme l'illustre la fig.5B, à la joncture entre la première zone anodique Z1a et la deuxième zone Z2, la tôle conductrice anodique 13a comporte, d'une part, des canaux d'homogénéisation 21a qui présente une profondeur augmentée Pa₁ supérieure à la valeur nominale Paₙ, et ici inférieure à Paₙ + Pcₙ (pas de contact continu avec la tôle conductrice cathodique 13c) : il s'agit alors de la première zone anodique Z1a. Elle comporte, d'autre part, des canaux d'homogénéisation 21a qui présente une profondeur égale à la valeur nominale Paₙ qui sont au contact des canaux d'homogénéisation cathodique 21c de profondeur Pcₙ : il s'agit alors de la deuxième zone Z2.

Il en ressort donc que les pertes de charge linéaires sont diminuées dans la première zone anodique Z1a du circuit d'homogénéisation anodique 20a, ce qui permet d'améliorer les performances du réacteur électrochimique équipé d'une telle plaque bipolaire 10, alors même que la plaque bipolaire 10 garde une épaisseur constante E_{ch} en tout point du plan XY dans une zone comportant au moins l'un des circuits d'homogénéisation 20a, 20c. L'écoulement du fluide caloporteur n'est pas modifié puisqu'il peut s'écouler dans toutes les directions du plan XY en particulier dans la deuxième zone Z2. Par ailleurs, l'homogénéisation du débit du gaz réactif dans le circuit de distribution anodique 14a peut être préservée.

Les figures 6A et 6B sont des vues partielles et schématiques de la plaque bipolaire 10 illustrée sur la fig.3A, en coupe longitudinale suivant l'axe X dans un premier tronçon dit profond Z1c₁ de la première zone cathodique Z1c (fig.6A), et en coupe longitudinale suivant l'axe X à cheval entre le tronçon profond Z1c₁ de la première zone cathodique Z1c et la deuxième zone Z2 (fig.6B).

Dans la première zone cathodique Z1c, les canaux d'homogénéisation 21c présentent une profondeur augmentée Pci, sur une partie de leur longueur (cf. fig.3A et 3B). En effet, la première zone cathodique Z1c comporte un premier tronçon Z1c₁ (dit profond) dans lequel les canaux d'homogénéisation 21c présentent une profondeur augmentée Pci, i.e. supérieure à la valeur nominale Pcₙ, suivi localement d'un deuxième tronçon Z1c₂ dans lequel les canaux d'homogénéisation présentent une profondeur Pc₂ comprise entre la valeur Pc₁ et la valeur nominale Pcₙ, et ici égale à la valeur nominale Pcₙ. Le deuxième tronçon Z1c₂ est ici appelé tronçon nominal. Dans cet exemple, le tronçon profond Z1c₁ s'étend à partir du collecteur anodique 11a et débouche, pour une part, sur le tronçon nominal Z1c₂, et pour une autre part, sur la deuxième zone Z2. Le tronçon nominal Z1c₂ s'étend à partir du tronçon profond Z1c₁ jusqu'à la deuxième zone Z2.

Dans le tronçon profond Z1c₁ de la première zone cathodique Z1c, les canaux d'homogénéisation 21c présentent une profondeur Pc₁ supérieure à la valeur nominale Pcₙ. Par ailleurs, comme décrit plus haut pour les canaux 21a, les canaux d'homogénéisation 21c à profondeur augmentée présente une longueur différente d'un canal à l'autre, qui est adaptée de sorte que le débit du gaz réactif soit sensiblement homogène à l'entrée 14c.1 du circuit de distribution cathodique 14c.

Comme l'illustre la fig.6A, les canaux d'homogénéisation cathodique 21c présentent, dans le tronçon profond Z1c₁, une profondeur Pc₁ supérieure à la valeur nominale Pcₙ. La tôle conductrice anodique 13a ne comporte pas de canaux d'homogénéisation 21a de sorte qu'elle est sensiblement plane et destinée à venir au contact de la cellule électrochimique adjacente. Elle comporte cependant localement des portions de renfort 17a dont la paroi de fond vient au contact de la paroi de fond 21c.1 d'un ou de plusieurs canaux d'homogénéisation 21c. Dans cet exemple, la profondeur Pc₁ est supérieure à la valeur nominale Pcₙ mais reste avantageusement inférieure à Paₙ + Pcₙ de sorte que les canaux d'homogénéisation 21c ne viennent pas au contact de la tôle conductrice anodique 13a (hormis au niveau des portions de renfort). Aussi, le fluide caloporteur peut circuler dans le plan XY, ce qui contribue à améliorer l'homogénéité de son débit dans le circuit de refroidissement 16. Cependant, en variante, la profondeur Pc₁ peut être égale à Paₙ + Pcₙ, de sorte que les canaux d'homogénéisation 21c sont au contact continu de la tôle conductrice anodique 13a dans tout le tronçon profond Z1c₁.

Dans le tronçon nominal Z1c₂ de la première zone cathodique Z1c, les canaux d'homogénéisation 21c présentent une profondeur Pc₂ qui est inférieure à la profondeur Pci, par exemple égale à la valeur nominale Pcₙ. La présence d'un tronçon nominal Z1c₂ provient notamment du fait que la deuxième zone Z2 présente différents tronçons d'axe d'écoulement différents (cf. fig.3A et 3B).

Comme l'illustre la fig.6B, à la jonction entre le tronçon profond Z1c₁ et la deuxième zone Z2, la tôle conductrice cathodique 13c comporte, d'une part, des canaux d'homogénéisation 21c qui présente une profondeur augmentée Pc₁ supérieure à la valeur nominale Pcₙ, et ici inférieure Paₙ + Pcₙ (pas de contact continu avec la tôle conductrice cathodique 13c) : il s'agit alors du tronçon profond Z1c₁. Elle comporte, d'autre part, des canaux d'homogénéisation 21c qui présente une profondeur égale à la valeur nominale Pcₙ qui sont au contact des canaux d'homogénéisation cathodiques 21c de profondeur Pcₙ: il s'agit alors de la deuxième zone Z2.

Il en ressort donc que les pertes de charge linéaires sont diminuées dans la première zone cathodique Z1c du circuit d'homogénéisation cathodique 21c, en particulier dans le tronçon profond Z1c₁, ce qui permet d'améliorer les performances du réacteur électrochimique équipé d'une telle plaque bipolaire 10, alors même que la plaque bipolaire 10 garde une épaisseur constante E_{ch} en tout point du plan XY dans une zone contenant au moins l'un des circuits d'homogénéisation 20a, 20c. L'écoulement du fluide caloporteur n'est pas modifié puisqu'il peut s'écouler dans toutes les directions du plan XY, en particulier dans la deuxième zone Z2. Par ailleurs, l'homogénéisation du débit du gaz réactif dans le circuit de distribution cathodique 14c peut être préservée.

A titre d'exemple, dans le cas où les gaz réactifs sont de l'hydrogène et de l'air, la profondeur nominale des canaux d'homogénéisation anodiques et cathodiques peut être égale à 230µm. Les canaux d'homogénéisation cathodiques peuvent alors présenter une profondeur Pc₁ égale à 400µm environ, c'est-à-dire une augmentation de près de 75% de la profondeur, sur au moins 10% et de préférence sur 30% de leur longueur totale. Ainsi, la perte de charge linéaire associée à de tels canaux d'homogénéisation cathodique diminue de 120mbar à 100mbar environ, ce qui correspond à une diminution de près de 17%.

Des modes de réalisation particuliers viennent d'être décrits. Différentes variantes et modifications apparaîtront à l'homme du métier. Ainsi, dans cet exemple, le circuit d'homogénéisation cathodique 20c comporte une zone Z1c formée du tronçon profond Z1c₁ et du tronçon nominal Z1c₂, alors que la zone Z1a du circuit d'homogénéisation anodique 20a ne comporte pas un tel tronçon nominal. Bien évidemment, cette configuration peut être inversée entre la face cathodique et la face anodique (i.e. tronçons profond et nominal dans la première zone anodique Z1a, alors que la première zone cathodique Z1c ne comporterait pas de tronçon nominal). Par ailleurs, une première zone Z1, qu'elle soit cathodique ou anodique, peut comporter une pluralité de tronçons, qu'ils soient dits profonds ou nominaux.

## Revendications

1. Plaque bipolaire (10), destinée à être située entre et au contact d'une anode (4) et d'une cathode (5) de deux cellules électrochimiques, comportant deux tôles conductrices (13a, 13c) accolées l'une à l'autre comportant des circuits de distribution anodique (14a) et cathodique (14c), la plaque bipolaire présentant une épaisseur constante (E_{ch}) dans une zone comportant au moins l'un des circuits d'homogénéisation (20a, 20c), comportant :
∘ des circuits de distribution anodique (14a) et cathodique (14c), pour approvisionner lesdites anode et cathode en gaz réactifs, superposés l'un à l'autre, s'étendant longitudinalement entre des première et deuxième extrémités (14.1, 14.2) opposées l'une de l'autre, définis par des reliefs des tôles conductrices (13a, 13c) ; et un circuit de refroidissement (16) défini par un espace interne situé entre les tôles conductrices (13a, 13c) ;
∘ des collecteurs anodique (11a) et cathodique (11c) pour l'injection de gaz réactifs ou la collection de fluides, et un collecteur (12) d'un fluide caloporteur, situés en regard des premières extrémités (14a.1, 14c.1) ;
∘ les circuits d'homogénéisation anodique (20a) et cathodique (20c), comportant chacun des canaux d'homogénéisation (21a, 21c) assurant la liaison fluidique entre l'un des collecteurs anodique (11a) et cathodique (11c) et la première extrémité correspondante (14a.1, 14c.1), partiellement superposés l'un à l'autre, de sorte que sont définies :
• une première zone anodique Z1a, resp. cathodique Z1c, comportant uniquement le circuit d'homogénéisation anodique (20a), resp. cathodique (20c), dont les canaux d'homogénéisation (21a, 21c) débouchent sur le collecteur anodique (11a), resp. cathodique (11c) ;
• une deuxième zone Z2 dans laquelle les circuits d'homogénéisation (20a, 20c) sont superposés l'un à l'autre, les canaux d'homogénéisation anodique (21a), resp. cathodique (21c), débouchant sur le circuit de distribution anodique (14a), resp. cathodique (14c), et présentant une profondeur nominale anodique Paₙ, resp. cathodique Pcₙ;
∘ **caractérisée en ce que**, dans au moins l'une des premières zones anodique Z1a et cathodique Z1c, au moins une partie des canaux d'homogénéisation (21a, 21c) présentent, sur au moins une partie de leur longueur, une profondeur Pa₁, Pc₁ supérieure à la profondeur nominale correspondante Paₙ, Pcₙ.

2. Plaque bipolaire (10) selon la revendication 1, dans laquelle la profondeur Pa₁, Pc₁ est inférieure à la somme des profondeurs nominales Paₙ, Pcₙ.

3. Plaque bipolaire (10) selon la revendication 1 ou 2, dans laquelle la profondeur Pa₁, Pc₁ est égale à au moins 1,75 fois la profondeur nominale correspondante Paₙ, Pcₙ.

4. Plaque bipolaire (10) selon l'une quelconque des revendications 1 à 3, dans laquelle la longueur des canaux d'homogénéisation (21a, 21c), dans la partie où ils présentent une profondeur Pa₁, Pc₁, est égale à au moins 10% de la longueur totale de ces canaux d'homogénéisation (21a, 21c) entre le collecteur (11a, 11c) et le circuit de distribution (14a, 14c) correspondant.

5. Plaque bipolaire (10) selon l'une quelconque des revendications 1 à 4, dont la tôle conductrice (13a, 13c), opposée à celle comportant des canaux d'homogénéisation (21a, 21c) de profondeur Pa₁, Pc₁, présente une surface principalement plane s'étendant en regard d'une pluralité desdits canaux d'homogénéisation de profondeur Pa₁, Pc₁.

6. Plaque bipolaire (10) selon la revendication 5, dont la tôle conductrice (13a, 13c), opposée à celle comportant des canaux d'homogénéisation (21a, 21c) de profondeur Pa₁, Pc₁, présente au moins une portion de renfort (17a, 17c) venant au contact d'une paroi de fond (21a.1, 21c.1) d'au moins un canal d'homogénéisation (21a, 21c) de profondeur Pa₁, Pc₁.

7. Plaque bipolaire (10) selon l'une quelconque des revendications 1 à 6, dans laquelle la première zone anodique Z1a ou la première zone cathodique Z1c comporte un premier tronçon dit profond Z1a₁ Z1c₁ dans lequel les canaux d'homogénéisation (21a, 21c) présentent la profondeur Pa₁, Pc₁, et un deuxième tronçon Z1a₂ Z1c₂ dans lequel les canaux d'homogénéisation (21a, 21c) présentent une profondeur Pa₂, Pc₂ comprise entre la profondeur Pa₁, Pc₁ et la profondeur nominale Paₙ, Pcₙ.

8. Plaque bipolaire (10) selon l'une quelconque des revendications 1 à 7, comportant un premier circuit d'homogénéisation (20a, 20c) dans lequel les canaux d'homogénéisation (21a, 21c) présentent ladite profondeur Pa₁, Pc₁, situé, en assurant la liaison fluidique, entre un collecteur d'injection (11a.1, 11c.1) d'un gaz réactif et une entrée (14a.1, 14c.1) du circuit de distribution correspondant (14a, 14c), ainsi qu'un deuxième circuit d'homogénéisation dans lequel les canaux d'homogénéisation présentent ladite profondeur Pa₁, Pc₁, situé, en assurant la liaison fluidique, entre une sortie du circuit de distribution correspondant et un collecteur adapté à collecter un fluide provenant circuit de distribution correspondant.

9. Réacteur électrochimique, comportant un empilement de cellules électrochimiques entre lesquels sont intercalées des plaques bipolaires (10) selon l'une quelconque des revendications précédentes, et un compresseur raccordé à un collecteur d'injection d'un gaz réactif, le circuit d'homogénéisation débouchant sur un tel collecteur d'injection comportant des canaux d'homogénéisation présentant ladite profondeur Pa₁, Pc₁.

## Patentansprüche

1. Bipolare Platte (10), die bestimmt ist, um zwischen und in Kontakt mit einer Anode (4) und einer Kathode (5) von zwei elektrochemischen Zellen angeordnet zu sein, zwei miteinander verbundene leitende Bleche (13a, 13c) beinhaltend, die anodische (14a) und kathodische (14c) Verteilungskreise beinhalten, wobei die bipolare Platte eine konstante Dicke (E_{ch}) in einem Bereich aufweist, der mindestens eine der Homogenisierungskreise (20a, 20c) beinhaltet, beinhaltend:
∘ anodische (14a) und kathodische (14c) Verteilungskreise zum Versorgen der Anode und Kathode mit Reaktivgasen, die einander überlagern und sich in Längsrichtung zwischen den ersten und zweiten einander gegenüberliegenden Enden (14.1, 14.2) erstrecken, und durch Reliefe der leitenden Bleche (13a, 13c) definiert sind; und einen Kühlkreis (16), der durch einen zwischen den leitenden Blechen (13a, 13c) angeordneten inneren Raum definiert ist;
∘ anodische (11a) und kathodische (11c) Kollektoren zur Injektion von Reaktivgasen oder zum Sammeln von Fluiden, und einen Kollektor (12) eines Wärmeträgerfluids, der gegenüber den ersten Enden (14a.1, 14c.1) angeordnet ist;
∘ wobei die anodischen (20a) und kathodischen Homogenisierungskreise (20c) jeweils Homogenisierungskanäle (21a, 21c) beinhalten, die die fluidische Verbindung zwischen einem der anodischen (11a) und kathodischen (11c) Kollektoren und dem entsprechenden ersten Ende (14a.1, 14c.1) sicherstellen, und sich teilweise überlagern, so dass definiert sind:
• ein erster anodischer Z1a, bzw. kathodischer Z1c Bereich, nur den anodischen (20a) bzw. kathodischen (20c) Homogenisierungskreis beinhaltend, deren Homogenisierungskanäle (21a, 21c) zum anodischen (11a) bzw. kathodischen (11c) Kollektor münden;
• ein zweiter Bereich Z2, in dem sich die Homogenisierungskreise (20a, 20c) überlagern, wobei die anodischen (21a) bzw. kathodischen (21c) Homogenisierungskanäle in den anodischen (14a) bzw. kathodischen (14c) Verteilungskreis münden, und eine nominale anodische Paₙ, bzw. kathodische Pcₙ Tiefe aufweisen;
∘ **dadurch gekennzeichnet, dass** in mindestens einem der ersten anodischen Z1a und kathodischen Z1c Bereiche mindestens ein Teil der Homogenisierungskanäle (21a, 21c) über mindestens einem Teil ihrer Länge eine Tiefe Pa₁, Pc₁ aufweist, die größer ist als die entsprechende nominale Tiefe Paₙ, Pcₙ.

2. Bipolare Platte (10) nach Anspruch 1, wobei die Tiefe Pa₁, Pc₁ kleiner ist als die Summe der nominalen Tiefen Paₙ, Pcₙ.

3. Bipolare Platte (10) nach Anspruch 1 oder 2, wobei die Tiefe Pa₁, Pc₁ mindestens dem 1,75-fachen der entsprechenden nominalen Tiefen Paₙ, Pcₙ entspricht.

4. Bipolare Platte (10) nach einem der Ansprüche 1 bis 3, wobei die Länge der Homogenisierungskanäle (21a, 21c) in dem Teil, in dem sie eine Tiefe Pa₁, Pc₁ aufweisen, mindestens 10 % der Gesamtlänge dieser Homogenisierungskanäle (21a, 21c) zwischen dem Kollektor (11a, 11c) und dem entsprechenden Verteilungskreis (14a, 14c) beträgt.

5. Bipolare Platte (10) nach einem der Ansprüche 1 bis 4, deren leitendes Blech (13a, 13c), gegenüber dem, das die Homogenisierungskanäle (21a, 21c) der Tiefe Pa₁, Pc₁ beinhaltet, eine überwiegend ebene Oberfläche aufweist, die sich gegenüber einer Vielzahl der Homogenisierungskanäle der Tiefe Pa₁, Pc₁ erstreckt.

6. Bipolare Platte (10) nach Anspruch 5, deren leitendes Blech (13a, 13c), gegenüber dem, das die Homogenisierungskanäle (21a, 21c) der Tiefe Pa₁, Pc₁ beinhaltet, mindestens eine Verstärkungszone (17a, 17c) aufweist, die mit einer Bodenwand (21a.1, 21c.1) von mindestens einem Homogenisierungskanal (21a, 21c) der Tiefe Pa₁, Pc₁ in Kontakt kommt.

7. Bipolare Platte (10) nach einem der Ansprüche 1 bis 6, wobei der erste anodische Bereich Z1a oder der erste kathodische Bereich Z1c einen ersten Abschnitt, tief Z1a₁, Z1c₁ genannt, beinhalten, in dem die Homogenisierungskanäle (21a, 21c) die Tiefe Pa₁, Pc₁ aufweisen, und einen zweiten Abschnitt Z1a₂, Z1c₂, in dem die Homogenisierungskanäle (21a, 21c) eine Tiefe Pa₂, Pc₂ aufweisen, die zwischen der Tiefe Pa₁, Pc₁ und der nominalen Tiefe Paₙ, Pcₙ liegt.

8. bipolare Platte (10) nach einem der Ansprüche 1 bis 7, einen ersten Homogenisierungskreis (20a, 20c) beinhaltend, in dem die Homogenisierungskanäle (21a, 21c) die Tiefe Pa₁, Pc₁ aufweisen, der, unter Sicherstellung der Fluidverbindung, zwischen einem Injektionskollektor (11a.1, 11c.1) eines Reaktivgases und einem Eingang (14a1, 14c.1) des entsprechenden Verteilungskreises (14a, 14c) angeordnet ist, sowie einen zweiten Homogenisierungskreis, in dem die Homogenisierungskanäle die Tiefe Pa₁, Pc₁ aufweisen, der, unter Sicherstellung der Fluidverbindung, zwischen einem Ausgang des entsprechenden Verteilungskreises und einem Kollektor angeordnet ist, der zum Sammeln eines Fluids aus dem entsprechenden Verteilungskreis geeignet ist.

9. Elektrochemischer Reaktor, einen Stapel elektrochemischer Zellen beinhaltend, zwischen denen bipolare Platten (10) nach einem der vorhergehenden Ansprüche gelegt sind, und einen Kompressor, der an einen Injektionskollektor eines Reaktivgases angeschlossen ist, wobei der Homogenisierungskreis in einen Injektionskollektor mündet, der Homogenisierungskanäle beinhaltet, die die Tiefe Pa₁, Pc₁ aufweisen.

## Claims

1. A bipolar plate (10), intended to be located between and in contact with an anode (4) and a cathode (5) of two electrochemical cells, including two conductive sheets (13a, 13c) placed side by side including anode (14a) and cathode (14c) distribution circuits, the bipolar plate having a constant thickness (E_{ch}) in a zone including at least one of the homogenisation circuits (20a, 20c), including:
∘ anode (14a) and cathode (14c) distribution circuits, to provision said anode and cathode with reactive gases, superimposed on each other, extending longitudinally between first and second ends (14.1, 14.2) opposite to each other, defined by reliefs of the conductive sheets (13a, 13c); and a cooling circuit (16) defined by an inner space located between the conductive sheets (13a, 13c);
∘ anode (11a) and cathode (11c) collectors for injecting reactive gases or collecting fluids, and a collector (12) for a coolant, located facing the first ends (14a.1, 14c.1);
∘ the anode (20a) and cathode (20c) homogenisation circuits, each including homogenisation channels (21a, 21c) ensuring fluid connection between one of the anode (11a) and cathode (11c) collectors and the first corresponding end (14a.1, 14c.1), partially superimposed on each other, so that there are defined:
• a first anode Z1a, resp. cathode Z1c zone, only including the anode (20a), resp. cathode (20c) homogenisation circuit, the homogenisation channels (21a, 21c) of which open onto the anode (11a), resp. cathode (11c) collector;
• a second zone Z2 in which the homogenisation circuits (20a, 20c) are superimposed on each other, the anode (21a), resp. cathode (21c) homogenisation channels opening onto the anode (14a), resp. cathode (14c) distribution circuit, and having an anode Paₙ, resp. cathode Pcₙ nominal depth;
∘ **characterised in that**, in at least one of the first anode Z1a and cathode Z1c zones, at least a part of the homogenisation channels (21a, 21c) has, on at least a part of their length, a depth Pa₁, Pc₁ greater than the corresponding nominal depth Paₙ, Pcₙ.

2. The bipolar plate (10) according to claim 1, wherein the depth Pa₁, Pc₁ is less than the sum of the nominal depths Paₙ, Pcₙ.

3. The bipolar plate (10) according to claim 1 or 2, wherein the depth Pa₁, Pc₁ is equal to at least 1.75 times the corresponding nominal depth Paₙ, Pcₙ.

4. The bipolar plate (10) according to any of claims 1 to 3, wherein the length of the homogenisation channels (21a, 21c), in the part where they have a depth Pa₁, Pc₁, is equal to at least 10% of the total length of these homogenisation channels (21a, 21c) between the collector (11a, 11c) and the corresponding distribution circuit (14a, 14c).

5. The bipolar plate (10) according to any of claims 1 to 4, the conductive sheet (13a, 13c) of which, opposite to that including homogenisation channels (21a, 21c) of depth Pa₁, Pc₁, has a mainly planar surface extending facing a plurality of said homogenisation channels of depth Pa₁, Pc₁.

6. The bipolar plate (10) according to claim 5, the conductive sheet (13a, 13c) of which, opposite to that including homogenisation channels (21a, 21c) of depth Pa₁, Pc₁, has at least one reinforcement portion (17a, 17c) contacting a bottom wall (21a.1, 21c.1) of at least one homogenisation channel (21a, 21c) of depth Pa₁, Pc₁.

7. The bipolar plate (10) according to any of claims 1 to 6, wherein the first anode zone Z1a or the first cathode zone Z1c includes a first so-called deep segment Z1a₁ Z1c₁ in which the homogenisation channels (21a, 21c) have the depth Pa₁, Pc₁, and a second segment Z1a₂ Z1c₂ in which the homogenisation channels (21a, 21c) have a depth Pa₂, Pc₂, of between the depth Pa₁, Pc₁ and the nominal depth Paₙ, Pcₙ.

8. The bipolar plate (10) according to any of claims 1 to 7, including a first homogenisation circuit (20a, 20c) in which the homogenisation channels (21a, 21c) have said depth Pa₁, Pc₁, located, ensuring the fluid connection, between a collector (11a.1, 11c.1) for injecting a reactive gas and an inlet (14a.1, 14c.1) of the corresponding distribution circuit (14a, 14c), as well as a second homogenisation circuit in which the homogenisation channels have said depth Pa₁, Pc₁, located, ensuring the fluid connection, between an outlet of the corresponding distribution circuit and a collector adapted to collect a fluid coming from a corresponding distribution circuit.

9. An electrochemical reactor, including a stack of electrochemical cells between which bipolar plates (10) according to any of the preceding claims are interposed, and a compressor connected to a collector for injecting a reactive gas, the homogenisation circuit opening onto such an injection collector including homogenisation channels having said depth Pa₁, Pc₁.
